# DEMANDE DE BREVET EUROPEEN

(11) **EP 1 103 359 A1**
(43) Date de publication de la demande: **30.05.2001**
(21) Numéro de dépôt: 00204156.4
(22) Date de dépôt: 22.11.2000
(51) Int. Cl.: B28D 1/04, B23D 45/10, B28D 7/04, B23D 59/02

(54) **Appareil pour scier des pierres naturelles**

(30) Priorité: 23.11.1999 EP 99203915
(71) Demandeur: Van Camp, Guy, 2520 Broechem (BE)
(72) Inventeur: Van Camp, Guy, 2520 Broechem (BE)

(57) **Abrégé**

Appareil pour le sciage de pierres comportant une section de sciage (Y) ainsi qu'un couple de convoyeurs (X) règlables assurant le transfert, le guidage, le centrage et le bloquage des pierres à travers cette section de sciage, cette dernière étant composée de sa part de deux longerons (A,A') ajustables et orientés dans le même sens que l'axe du convoyeur (X), chaqu'un de ces longerons portant au moins deux disques (N) tournant tous dans le même plan et dont les disques (N) sont montés sur leurs longerons (A,A') respectifs par paires vis-à-vis les disques (N) sur l'autre longeron de façon que les pierres qui sont présentées devant les disques (N) par le couple de convoyeurs (X) soient sciées simultanément et proportionellement des deux côtes opposés et dont les deux dernières disques sont décalés afin de garantir que la dernière coupe soit assurée.

## Description

La présente invention concerne un appareil pour le sciage de pierres naturelles.
Le sciage des matériaux en pierre naturelle -plus précisément des pavés neufs ou de réemploi- peut être effectué à très haut rendement, de façon fiable, économique et à bon prix par l'appareil décrit par la présente invention.

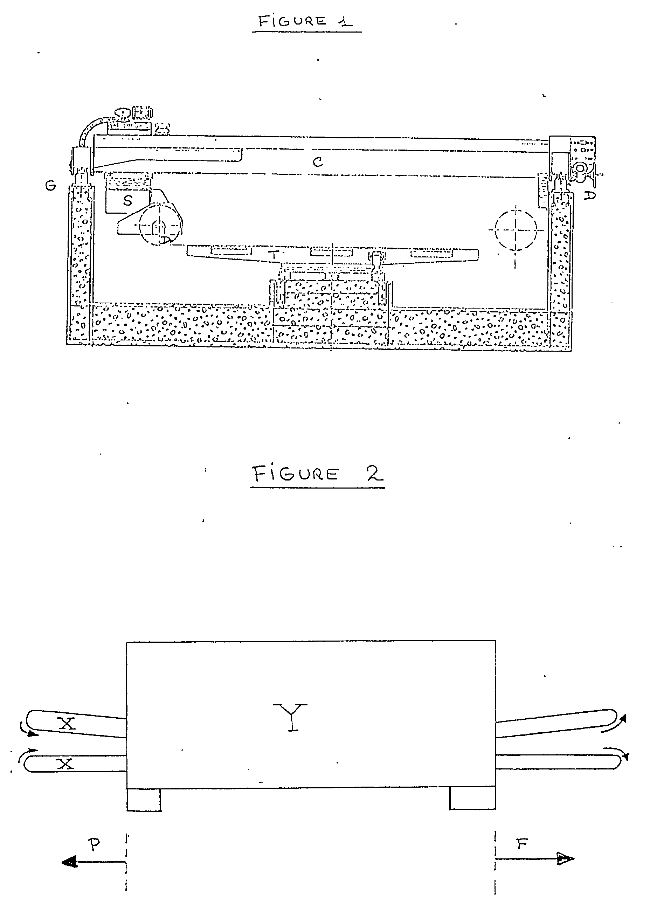

Jusqu'à présent de tels matériaux sont sciés par des machines telles qu'illustrées par figure 1.
Les éléments en pierre à scier sont posés individuellement sur une table (T) et fixé sur cette table par une pince ou autre système de fixation.
L'ensemble support (S) et disque (D) qui se trouvent au départ du coté gauche (G) se positionnent de tel façon qu'ils attaquent la pierre à la bonne hauteur pour commencer à scier le premier pas, c'est à dire sur seulement une partie limitée de la hauteur à scier.
Lors de ce premier pas le support (S) se déplace sur la traverse (C) de coté gauche (G) vers le coté droit (D).
Lorsque ce premier pas de sciage est terminé, le support s'arrète dans sa position extrème droite (D), le disque est baissé d'une distance correspondant d'un prochain pas, et l'ensemble support (S) et disque (D) se met à nouveau en mouvement de droite (D) à gauche (G) pour attaquer la pierre, cette fois-ci en la coupant un peu plus profond que lors de son passage précédant.
Ce cycle se répète tant de fois jusqu'à ce que la pierre est sciée sur la totalité de sa hauteur.

Ces machines se caractérisent d'un rendement réduit, plus précisément en termes de quantités de pierres sciées par heure de production.
Pour assurer une grande capacité de production il faut donc plusieures machines, donc de grands investissements.

Dans toutes ces machines classiques il y a beaucoup de temps que la machine n'est pas productive:
- lors de chaque arrêt aux positions droite (D) ou gauche (G) la machine ne coupe pas dans la pierre: elle se rallentit et s'arrête, redescend la disque d'un pas, redemarre et réattaque la pierre,
- en fin de cycle complet lorsque la coupe est terminée il faut arrêter complètement la machine , donc lorsque la ou les pierres sont entièrement coupés. Cet arrêt est nécessaire pour évaquer la production des pierres coupées et pour installer dans la machines de nouvelles pierres qu'il faut débiter.
   Ce cycle de déchargement/chargement se répète systématiquement et immobilise à nouveau fréquement la machine, donc perte de rendement.

En plus cette methode de sciage est chère du fait que les couteuses lames de sciage sont utilisées de façon inéfficiente.
Ces lames pour le sciage de pierre sont composées d'un disque circulaire en acier qui sert de base et support pour des segments diamantés, segments qui sont soudés sur le contour extérieur du disque.
Ces segments -qui sont toujours plus larges qui l'épaisseur de la tôle du disque- effectuent le sciage proprement dit et s'usent lors du sciage.
Les pièrres sont attaqués d'un seul coté par le disque diamanté, le diamètre du disque est déterminé par la hauteur de la pierre à scier: plus que la pierre est épaisse, plus que le diamètre du disque devra être grand, plus que l'épaisseur de la tôle de disque s'acroit, plus que le segment devient épais. Un segment épais rend le disque plus cher à l'achat, 'consomme' plus de pierre et plus d'energie, demande des machines plus robustes donc plus chères.

Traditionellement le segment diamanté est continuellement arrosé par un jet d'eau lors du sciage.
Ce jet d'eau assure deux fonctions:
- refroidir le segment qui attaque la pierre à plus de 30 m/sec,
- évaquer les sédiments (particles de pierre) qui sont libérés lors du sciage, Problème avec ce système est que lorsque le jet d'eau est interrompu ou même seulement diminué (ce qui est difficilement détectable) par quelque défaut technique ou autre raison, le refroidissement n'est plus optimal -ou même plus du tout assuré- et le segment se surchauffe, ce qui engendre son usure prématuré ou même sa rupture totale.
   Dans ce cas on est obligé d'interrompre la production pour remédier au problème. Des circuits de détection existent, mais ne sont pas toujours fiables ou acurrates.

Autre problème est que l' eau est entrainé par les segments lors de la coupe dans la pierre à plus de 30 m/sec.
Lorsque le segment sort de la pierre il libère ses eaux -par définition chargés de sédiments- et les projete dans l'air ambiante.
Toutes les precautions prises ne peuvent pas éviter que ces projections d'eau boueuse salissent la machine et les locaux de production.

Comme la lamme est composée d'un disque en acier tournant à haute vitesse lorsqu'il attaque la pierre, la tôle du disque transmet ses vibrations à l'air ambiente. Ceci provoque des bruits très intense, parfois de plus de 110 dB. Des mésures pour réduire ces bruits nuissants sont toujours prises au niveau du disque (tôles spéciales) mais s'avèrent souvent inéfficaces et surtout augmentent considérablement le prix des disques.

Autre désavantage des méthodes/machines de sciage actuels est que lorsque les segments sont usés ou s'il y a des problèmes de disque l'échange du disque est une opération complexe qui demande beaucoup de temps et de main d'oeuvre.
Comme cet échange de disque se fait directement sur et dans la machine il faut forcément immobiliser la machine donc interrompre la production pour la période du démontage de l'ancien disque, et montage/centrage du nouveau disque. Ceci influence à nouveau négativement le rendement de la machine.

La présente invention a pour but de créer un appareil qui remédie à ces défauts et inconvenients lors de l'utilisation.
Ce but est atteint de manière surprenante par l'appareil comme décrit par la revendication 1.
L'appareil tel que décrit par la revendication 1 permet de scier des pierres naturelles tels que des pavés de manière éfficace, économique et fiable.

En plus un appareil construit selon notre invention présente d' avantages supplémentaires.
Des caractéristiques additionels qui peuvent être opérés le cas échéant afin d'appliquer l'invention avantageusement, sont décrits par les revendications dépendantes.

Ci-dessous est explicité en détail une configuration préférée à l'aide d'un exemple non-limitatif de notre invention.
L'invention est éclaircie ci-après, illustrée par les dessins suivants:
- figure 2 qui donne une vue globale de l'appareil,

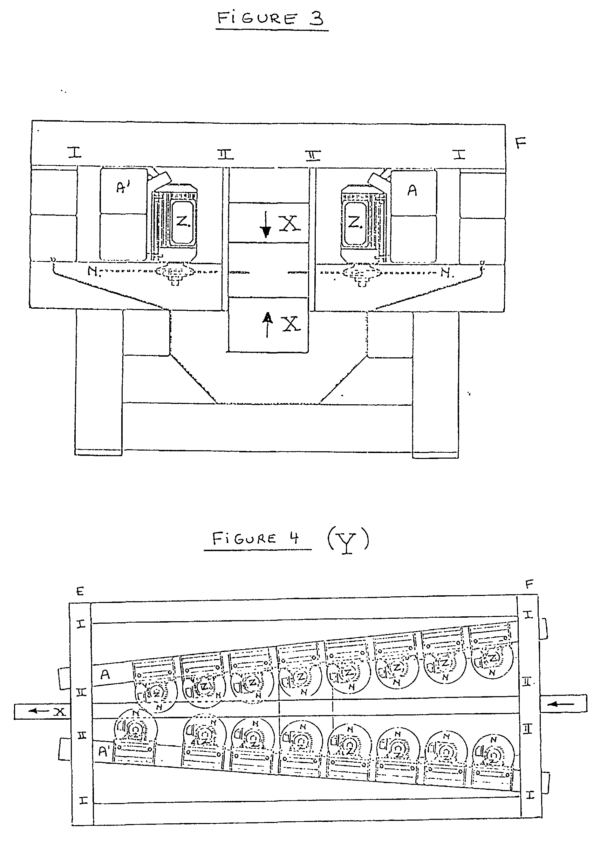

- figure 3 qui donne une vue de face de ce même appareil,
- figure 4 qui donne une vue de la section de sciage de ce même appareil.

L'appareil à scier comporte un chassis sur lequel sont bâties essentiellement trois parties:
1) une partie primaire (P) où les pierres à scier sont positionnées sur une bande inférieure et prises entre une bande inférieure et une bande supérieure, les deux bandes ayant la vitesse règlable et synchronisée,
2) une partie centrale constituée essentiellement d'une section de sciage (Y) à travers laquelle les matériaux à scier sont transportés par les bandes susdites,
3) une partie finale (F) où les bandes susdites s'ouvrent afin que les matériaux peuvent être enlevés de l'appareil.

Référant à ces figures, notre appareil à scier comporte un couple de convoyeurs (X) assurant le transfert ainsi que le guidage, éventuel centrage et la bonne fixation des éléments en pierre à travers la section de sciage (Y) de l'appareil.

Ce couple de convoyeurs sont en fait deux convoyeurs superposés, opérant à la même vitesse règlable et dont la distance de chaque convoyeur vis-à-vis de l'autre ainsi donc également leur position moyenne vis-à-vis du plan de sciage sont règlables.
La section de sciage (Y) comporte elle-même deux longerons (A A') qui chacun portent au moins deux disques de sciage (N) qui évoluent tous dans un même plan horizontal.
Il est préférable que chaque disque de sciage soit fixés au longeron par l'intermédiaire de moteur (Z) correspondant.
De préférence le disque de sciage est entrainé directement par l'axe du moteur individuel correspondant.

La position des deux bouts de chaque longeron est infiniment règlable entre ses positions extrêmes.
Ce système de règlage permet également de bloquer ainsi chaque longeron dans n'importe quelle position vis-à-vis l'axe centrale du convoyeur, position choisie entre les points (I & II) sur les travers (E & F) qui sont perpendiculaires à l'axe du convoyeur.

Cette 'liberté' controlable (règlage) de la position des bouts des deux longerons vis-à-vis les positions (I & II) des travers permet de positioner ces longerons de telle façon que malgré l'utilisation de disques de même diamètre la profondeur successive de sciage s'augmente et se fasse systématiquement des deux cotés de la pierre qui est présentée en bonne et stable position à la vitesse programmée devant la disque par le convoyeur traversant la section de sciage.

En plus cette 'liberté' règlable des longerons permet non seulement d'adapter l'écartement des paires de disques opposés à la taille de la pierre qu'il faut débiter mais elle permet également d'ajuster ces longerons -donc les disques- à fur et à mesure que les segments s'usent: on peut donc ratrapper la perte de diamétre.

Le fait d'opérér avec des disques de même diamètre offre beaucoup d'avantages: un stock limité d'un seul diamètre de disques, consommation/production d'un seul type de disque donc meilleurs prix d'achat.
En plus on peut utiliser des moteurs identiques pour entrainer les différents disques, donc mêmes flasques, moins de pièces de rechange, meilleurs prix.

Autre grand avantage est l'optimalisation de l'usage du disque: en attaquant la pierre des deux cotés opposés, la profondeur de coupe à réaliser est réduite de 50 % (la moitié de la pierre), ce qui implique un disque de plus petit diamètre, donc la tôle moins épaisse, donc le segment moins épais, donc moins de consommation de pierre et moins de consommation d'énergie lors du sciage, ou bien on bénéficié de l'avantage qu'à diamètre égal on arrive à couper des pierre de plus grande taille.
Comme le segment est moins épais, moins de volume de pierre est 'consommée'.
Ceci implique à nouveau que le pourcentage de sédiments de sciage qui 'contaminent' les eaux de refroidissement est églement réduit.

Le couple de convoyeurs assure différents fonctions: il 'transporte' les pierre dans la section d'un disque à l'autre, il permet de controler la vitesse d'alimentation de pierre, il fixe les pierres avant l'attaque des premiers disques et stabilise la pierre entre les coupes successives.
En jouant sur les duretés, élasticités, compositions, épaisseurs ou autres paramètres de la matière couvrant un seul ou les deux convoyeurs on peut influencer le calage des matériaux en pierre à scier et le cas échéant on peut même parfaitement effacer les éventuels tolérances en épaisseur de la pierre -donc centrer la pierre vis-à-vis du plan des disques de sciage.

La machine est construite de tel façon qu'elle fait également office de réservoir pour le liquide de refroidissement des disques diamantés.
Le niveau de ce liquide peut être fixé que les disques soient complètement submergés. Ceci apporte comme grand avantage que le flux d'eau est toujours presque à l'infini: on ne court donc plus le risque de scier à sec ou avec trop peu de refroidissement.

En plus, comme les disques -et donc les sources de bruit- se trouvent sous l'eau, le niveau sonore est spectaculairement réduit.

La fixation de l'unité moteur et son disque sur le longeron ne se fait pas nécessairement directement.
Dans cet exemple cette fixation est assurée par un faux-chassis sur lequel ce groupe moteur + disque sont attachés.
Ce faux-chassis est à son tour fixé sur le longeron à l'aide d'une fixation rapide. Ceci permet d'avoir un seul ensemble (faux-chassis + moteur + disque) qui sont totalement identiques donc interchangeables.
La seule différence qui reste est la direction de rotation gauche ou droite.
A nouveau cette solution apporte d'énormes avantages: en cas de rupture moteur ou même si l'on doit simplement changer un disque dont les segments sont usés ou cassés, il suffit de débloquer l'ensemble (faux-chassis + moteur + disque), d'enlever cet ensemble de la machine et de simplement installer un autre ensemble (faux-chassis + moteur + disque) préalablement préparé et prérèglé.
De ce fait l'immobilisation de machine -donc perte de productivité- est diminuée de façon spectulaire.

Finalement le retour des eaux qui préalablement sont clarifiés dans des bacs de sédimentation extérieurs de la machine se fait par l'intérieur des longerons d'où ces eaux sont libérés à la machine par des trous à la hauteur de chaque disque.
Ceci évite qu'il faut prévoir tout une série de tuyaux, flexibles ou autres pour ramener et diffuser ces eaux dans la machine, tous ces éléments préscrits étant très fragiles, vulnérables à une rupture, fuite, obstruction ou tout autre défaut qui puisse perturber le fonctionnement de la machine.
En plus l'utilisation des longerons comme canalisations des eaux rend la machine moins complexe lors de la construction, de l'utilisation et de l'entretien.

## Revendications

1. Appareil pour le sciage de matériaux en pierre comprenant un couple de convoyeurs servant à transporter des matériaux en pierre à travers une section de sciage,
comportant deux longerons ( A et A' ) alignés dans le sens des convoyeurs, chaqu'un muni d'au moins deux disques de sciage tous tournant dans un même plan horizontal,
ces disques de sciage et ces longerons étant positionnés de telle façon
que lors de l'opération de sciage les matériaux en pierre sont pénétrés simultanément des deux côtés opposés par un ensemble de deux disques de sciage opposés, chaqu'un des deux disques opposés portés par son longeron respectif,
que chaque ensemble de deux disques de sciage successifs opposés,
chaqu'un des deux disques opposés porté par son longeron respectif,
coupe plus profondément que l'ensemble de deux disques précédents,
que le dernier ensemble de disques de sciage opposés, chaqu'un des deux disques de opposés porté par son longeron respectif sont positionées chevauchantes et excentriques afin de enlever la dernière partie non-coupée des matériaux en pierre

2. Appareil selon la revendication 1, caractérisée en ce que les deux longerons sont individuellement positionnables vis-à-vis de l'axe du convoyeur de telle façon que l'ouverture entre le premier ensemble de disques de sciage opposés corresponde à la dimension des matériaux en pierre à scier.

3. Appareil selon la revendication 1 ou 2, caractérisée en ce qu'elle comporte un réservoir étache contenant un liquide de réfroidissement dans lequel les disques sont submergés lors de l'opération de sciage.

4. Appareil selon une des revendications précédantes, caractérisée en ce que chaque disque est individuellement et directement entrainé par l'axe de son moteur, moteur monté sur le longeron.

5. Appareil selon une des revendications précédantes, caractérisée en ce que l'unité moteur-disque est montée sur le longeron par l'indermédiaire d'un faux-chassis.

6. Appareil selon une des revendications ci-dessus caractérisée en ce que l'alimentation des eaux de refroidissement se fait en utilisant les poutres du chassis ou des longerons comme canalisations.
